# EUROPEAN PATENT SPECIFICATION

(11) **EP 3 214 118 B1**
(45) Date of publication and mention of the grant of the patent: **07.10.2020**
(21) Application number: 15855341.2
(22) Date of filing: 09.08.2015
(51) Int. Cl.: C08K 5/5313, C08K 5/5393, C08K 3/32, C08K 5/5317

(54) **ADDITIVE COMPOSITION FOR POLYMER AND PREPARATION METHOD THEREFOR AND FLAME-RETARDANT THERMOPLASTIC POLYMER MOULDING MATERIAL CONSISTING OF SAME**
ADDITIVZUSAMMENSETZUNG FÜR POLYMER UND HERSTELLUNGSVERFAHREN DAFÜR SOWIE FLAMMHEMMENDE THERMOPLASTISCHE POLYMERFORMMASSE DARAUS
COMPOSITION D'ADDITIF POUR POLYMÈRE ET SON PROCÉDÉ DE PRÉPARATION ET MATIÈRE À MOULER DE TYPE POLYMÈRE THERMOPLASTIQUE IGNIFUGE LA CONTENANT

(30) Priority: 29.10.2014 CN 201410592746
(43) Date of publication of application: 06.09.2017
(73) Proprietor: Zhuhai Wango Chemical Co., Ltd., Zhuhai, Guangdong 519050 (CN)
(72) Inventor: LI, Jide, Guangzhou Guangdong 510520 (CN); CHAI, Shengyong, Guangzhou Guangdong 510520 (CN); LU, Changli, Guangzhou Guangdong 510520 (CN); CHEN, Lin, Guangzhou Guangdong 510520 (CN); KONG, Lei, Guangzhou Guangdong 510520 (CN); LI, Yan, Guangzhou Guangdong 510520 (CN)
(74) Representative: Wibbelmann, Jobst
(86) International application number: PCT/CN2015/086433
(87) International publication number: WO 2016/065971

(56) References cited:
- WO-A1-2013/083247
- WO-A1-2016/101800
- CN-A- 1 280 583
- CN-A- 104 371 142
- CN-A- 104 497 504
- TW-A- 201 335 345
- US-B1- 6 270 560
- US-B2- 7 420 007
- US-B2- 7 635 785

## Description

### THECHNICAL FIELD

The invention relates to an additive composition for polymer as defined in the claims, a preparation method thereof and a flame retardant thermoplastic polymer molding material as defined in the claims.

### BACKGROUND

Dialkyl phosphinates, widely used as flame retardants, are known as being synthesized by different methods. For example, patent DE443092 discloses a bis-substituted metallic phosphinate used as flame retardant in polyester. Patents DE19910232 and US6248921 disclose a preparation method of bis-substituted metallic phosphinate. Patent US6359171B1 discloses a preparation method of dialkyl aluminum phosphinate which firstly employed yellow phosphorus to synthesize monoalkyl phosphinates and then reacted an acid obtained by a hydrolyzation after a vinylation initiated by free radicals with aluminum salt to prepare a dialkyl aluminum phosphinate flame retardant.

Dialkyl aluminum phosphinate is a new-type halogen-free flame retardant with high thermal stability and excellent flame retardant performance. However, in practical use, a flame retardant polymer molding composition added with dialkyl aluminum phosphinate during processing was found to bring a specifically severe corrosion to a screw of a mixing combination device, and to do harm to the surrounding polymers, particularly to cause a degradation of polymer. A main reason is that dialkyl phosphinic acid ionized by the dialkyl aluminum phosphinate at high temperature has a selective complexation with metal ions, and especially has relatively high selectivity for nickel ions and chromium ions in stainless steel, so that dialkyl phosphinate brings a severe corrosion to the screw in the processing of the flame retardant polymer. We have also found in a research that corrosivity of the dialkyl phosphinate to the screw would become severer as its alkyl chain became longer. In practical use, we have also found that a whiteness of flame retardant parts added with dialkyl aluminum phosphinate is somewhat relatively low.

By research, we found that an additive composition comprising components A-C as defined in the claims can reduce the corrosion of the flame retardant polymer molding composition, to the screw of the mixing combination device during processing, and nearly has no influence on other performances of the flame retardant polymer.

Patent CN103154110 discloses that 1-80% of phosphites being mixed into dialkyl phosphinates acts as a stabilizer. We found that, since aluminum phosphite has a relatively low thermal decomposition temperature and is easily decomposed by heating during high temperature extrusion molding processing in engineering plastics (a processing temperature for most of the engineering plastics is above 200°C). A highly toxic phosphine gas which is pyrophoric in a presence of air may be produced by aluminum phosphite when it is decomposed. By research, we found that aluminum phosphite in an amount less than 1% is more advantageous for corrosion resistance, stability and safety.

Simultaneously, by research we also found that the additive composition of the invention can enhance the whiteness of the flame retardant polymer molding composition parts which are added with dialkyl phosphinate.

### SUMMARY OF THE INVENTION

In order to solve problems such as a whiteness of a flame retardant polymer added with dialkyl phosphinate and a corrosion of its molding composition to a screw of a mixing combination device during processing, a purpose of the present invention is to provide an additive composition to provide a flame retardant thermoplastic molding material consisting of the same. The additive utilized in polymers brings little corrosion to the screw of mixing combination device during processing, makes little damages to surrounding polymers, enhances the whiteness of flame retardant polymer molding composition parts and nearly has no influence on other performances of the flame retardant polymer.

Another purpose of the present invention is to provide a preparation method of above-mentioned additive composition for polymer which has a simple process flow, a short reaction period and a high total yield.

The present invention is realized by following technical solutions:
An additive composition for polymer comprising components A, B and C, wherein it comprises:
a component A: 80wt% - 99.99wt% of dialkyl phosphinates with structures shown as Formula (I): 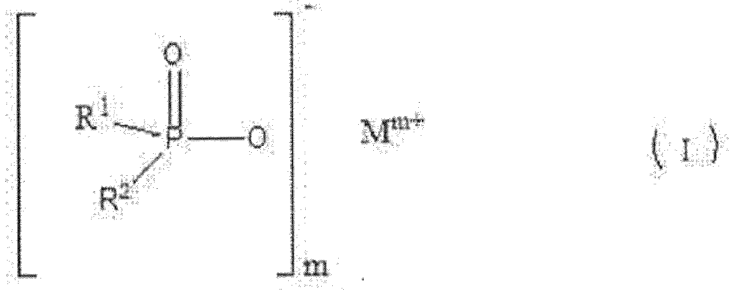 wherein, R1 and R2 are the same or different, representing ethyl, propyl and/or butyl;
   M is Mg, Ca, Al, Zn or Fe;
   m is 2 or 3;
a component B: up to 20wt% of components
   with structures shown as Formula (II): 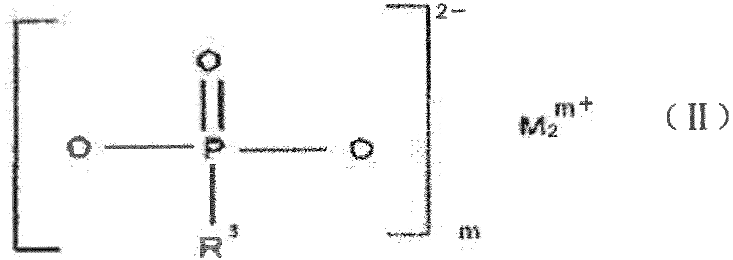 wherein, R3 represents ethyl, propyl and/or butyl; M is Mg, Ca, Al, Zn or Fe; m is 2 or 3; and
a component C: up to 0.9wt% of phosphites with structures shown as Formula (III): 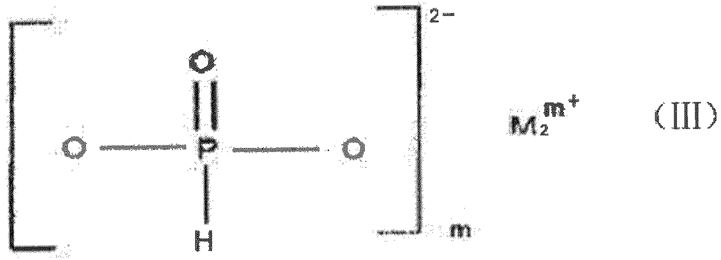 wherein, M is Mg, Ca, Al, Zn or Fe; m is 2 or 3;
   and a total sum of the components A, B and C is always 100wt%.

Preferably, the additive composition for polymer comprises:
95wt% - 99.99wt% of the component A;
up to 5wt% of the component B;
up to 0.9wt% of the component C;
the component B and the component C are not 0wt% simultaneously, and the total sum of the components A, B and C is always 100wt%.

The polymer is PBT, nylon, PPE, TPE, TPU, high temperature nylon or epoxy resin, preferably PBT, nylon or PPE.

A preparation method of above-mentioned additive composition for polymer according to the present invention is in accordance with one of methods as follows:
method 1:
   a) adding hypophosphorous acid or hypophosphite into a solvent, followed by a reaction with olefins under an effect of an initiator and a reaction promoter, dialkyl phosphinic acid or a salt solution thereof is obtained, dialkyl phosphinate is prepared by a reaction of a solution of dialkyl phosphinic acid or salt thereof with an aqueous solution of a metal compound;
   b) adding phosphorous acid or phosphite into a solvent, followed by a reaction with olefins under an effect of an initiator and a reaction promoter, further reacting with an aqueous solution of a metal compound;
   c) phosphite is obtained by a reaction of phosphorous acid or salt thereof with the metal compound;
   d) the additive composition for polymer is obtained by mixing products obtained from step a) and step b) and step c);
   wherein the hypophosphite is sodium hypophosphite or potassium hypophosphite; the phosphite is sodium phosphite or potassium phosphite;
   the metal compound is a metal compound of Mg, Ca, Al, Zn or Fe;
or method 2:
   mixing dialkyl phosphinic acid or the salt solution thereof with alkyl phosphonic acid or the salt solution thereof and/or phosphorous acid or a salt solution thereof, followed by a reaction with a solution of a metal compound, the additive composition for polymer is obtained. The solvent is water; the initiator is an azo initiator, an organic peroxide initiator or an inorganic peroxide initiator; and the olefin is ethylene or butylenes, or a mixture thereof.

The reaction promoter is sodium borohydride or potassium borohydride.

Use of the additive composition for polymer mentioned in the present invention as a flame retardant.

The present invention further discloses a flame retardant thermoplastic polymer molding material containing above-mentioned additive composition, comprising 5 to 20 parts by weight of said additive for polymer, and 50 to 70 parts by weight of the polymer or a mixture thereof.

The polymer is polyester, nylon, high temperature nylon, PPE, TPE, TPU or epoxy resin, preferably polyester, nylon or PPE.

The flame retardant thermoplastic polymer molding material in the invention further comprises 15 to 30 parts by weight of a glass fiber and 1 to 5 parts by weight of other promoter.

Compared with the prior art, the present invention has following beneficial effects:
1) the additive composition as defined in the claims serves as the additive for a flame retardant polymer. The additive used in polymers, during processing, extremely reduces the corrosion extent of the dialkyl phosphinate as the additive for the flame retardant polymer to the screw of a mixing combination device. A process cost for equipment is decreased, meanwhile loss of energy and manual work for changing screws frequently during processing is decreased and the application scope of plastic additives in the market is greatly broadened;
2). The additive is used in polymers, so that the whiteness of polymer parts prepared by extrusion molding is better than that of the conventional dialkyl phosphinate-modified polymer parts;
3) the preparation technology of the additive is simple, safe and with low production cost as well as practicability.

### DETAILED DESCRIPTION OF THE PREFERRED EMBODIMENT

The present invention will be further described by way of specific implementations, and the following embodiments are preferred implementations of the invention, but the implementations of the present invention are not limited by the following embodiments.

### Embodiment 1: preparation of diethyl aluminum phosphinate as a single component A

1060.0g (10mol) of sodium hypophosphite monohydrate, 9.1g (0.3%mol of hypophosphite ions) of 1,1-di(ter-butylperoxy)-3,3,5-trimethyl-cyclohexane, 3.0g of sodium borohydride and 1500g of water were added into an autoclave. The autoclave was evacuated followed by three times of nitrogen displacement, and then was evacuated again. Ethylene was injected by a decompressor and a pressure of the autoclave was controlled at 2.0MPa. The temperature of the autoclave was heated to 95°C and kept constant for 5 hours. 18.1g (0.6%mol of hypophosphite ions) of 1,1-di(ter-butylperoxy)-3,3,5-trimethyl-cyclohexane was refilled continuously within the 5 hours, followed by the temperature being increased to 100°C and kept constant for 1 hour. After the autoclave was cooled and vented, 3169.3g of an aqueous solution of diethyl sodium phosphinate was obtained, corresponding to an absorptive amount of ethylene of 579.1g (103.4% of a theoretical amount).

Analysis of ³¹P-NMR:
molar content of diethyl phosphinic acid: 98.1%
molar content of ethyl phosphonic acid: 0%
molar content of phosphorous acid: 0%
molar content of others: 1.9%.

949.9g of the aqueous solution of diethyl sodium phosphinate was added with 2000g of water, followed by being heated to 90°C with stirring. A solution of 20% aluminum sulfate octadecahydrate which was prepared by mixing 333.0g (0.5mol) of aluminum sulfate octadecahydrate with 1332g of water, was dropwise added thereto within 1.5 hours, and the temperature was kept at 90°C for 1 hour. After filtration and being washed with 2000L of water for three times, a filter cake was obtained and dried at 130°C to a constant weight. 374.6g of diethyl aluminum phosphinate was obtained with a yield of 96.05%.

### Embodiment 2: preparation of a single component B

1171.4g (10mol) of 70% phosphorous acid, 9.1g (0.3%mol of phosphorous acid) of 1,1-di(ter-butylperoxy)-3,3,5-trimethyl-cyclohexane and 3.0g of sodium borohydride were added into the autoclave. The autoclave was evacuated followed by five times of nitrogen displacement, and then was evacuated again. Ethylene was injected by the decompressor and the pressure of the autoclave was controlled at 2.0MPa. The temperature of the autoclave was heated to 90°C and kept constant for 10 hours. 18.1g (0.6%mol of phosphorous acid) of 1,1-di(ter-butylperoxy)-3,3,5-trimethyl-cyclohexane was refilled continuously, followed by the temperature being increased to 100°C and kept constant for 1 hour. After the autoclave was cooled and vented, 1487.5g of ethyl phosphonic acid solution was obtained, corresponding to the absorptive amount of ethylene of 285.9g (102.1% of the theoretical amount).

Analysis of ³¹P-NMR:
molar content of ethyl phosphonic acid: 98.8%
molar content of phosphorous acid: 0%
molar content of others: 1.2%.

223.1g of the ethyl phosphonic acid solution was added with 1000g of water, followed by being heated to 90°C with stirring. A solution of 20% aluminum sulfate octadecahydrate which was prepared by mixing 333.0g (0.5mol) of aluminum sulfate octadecahydrate with 1332g of water, was dropwise added thereto within 1.5 hours, and the temperature was kept at 90°C for 1 hour. After filtration and being washed with 1000L of water for three times, a filter cake was obtained and dried at 130°C to a constant weight. 179.0g of ethyl aluminum phosphonate was obtained with a yield of 93.98%.

### Embodiment 3: preparation of aluminum phosphite as a single component C

1110.0g of an aqueous solution of 20wt% (0.33mol) aluminum sulfate was dropped into 1080g of an aqueous solution of 20wt% (1.0mol) sodium phosphite pentahydrate with a temperature kept constant at 80°C within 1 hour. After filtration, a filter cake was obtained and washed with 1000L of water for three times. 94.27g of aluminum phosphite was obtained with a yield of 95.22%.

### Embodiment 4:

Diethyl aluminum phosphinate was prepared the same as Embodiment 1. An additive composition for polymer was obtained by adding 5000g of diethyl aluminum phosphinate and 0.98g of ethyl aluminum phosphonate into a high-speed mixer for mixing for 30 minutes.

In particular, a content of ethyl aluminum phosphonate was 0.02wt% (mass portion accounting for a total content, similarly hereinafter).

### Embodiment 5:

The additive composition for polymer was obtained by adding 5000g of diethyl aluminum phosphinate and 5.0g of ethyl aluminum phosphonate into the high-speed mixer for mixing for 30 minutes.

In particular, the content of ethyl aluminum phosphonate was 0.1 wt%.

### Embodiment 6:

The additive composition for polymer was obtained by adding 5000g of diethyl aluminum phosphinate and 48.4g of ethyl aluminum phosphonate into the high-speed mixer for mixing for 30 minutes.

In particular, the content of ethyl aluminum phosphonate was 0.96wt%.

### Embodiment 7:

The additive composition for polymer was obtained by adding 5000g of diethyl aluminum phosphinate and 250.0g of ethyl aluminum phosphonate into the high-speed mixer for mixing for 30 minutes.

In particular, the content of ethyl aluminum phosphonate was 4.8wt%.

### Embodiment 8:

The additive composition for polymer was obtained by adding 5000g of diethyl aluminum phosphinate and 500.0g of ethyl aluminum phosphonate into the high-speed mixer for mixing for 30 minutes.

In particular, the content of ethyl aluminum phosphonate was 9.1wt%.

### Embodiment 9:

The additive composition for polymer was obtained by adding 5000g of ethyl-butyl aluminum phosphinate and 1200.0g of ethyl aluminum phosphonate into the high-speed mixer for mixing for 30 minutes.

In particular, the content of ethyl aluminum phosphonate was 19.4wt%.

### Embodiment 10:

The aqueous solution of 20wt% diethyl sodium phosphinate in was prepared the same as Embodiment 1. The additive composition was prepared by adding 0.1 wt% (mass percent of ethyl phosphonic acid accounting for diethyl phosphinic acid) of ethyl sodium phosphonate into the aqueous solution of diethyl sodium phosphinate, and then reacting with theoretical amount of 20wt% aluminum sulfate aqueous solution. The content of ethyl aluminum phosphonate was 0.1wt%.

### Embodiment 11:

The aqueous solution of 20wt% diethyl sodium phosphinate was prepared the same as Embodiment 1. The additive composition was prepared by adding 1.0wt% of ethyl sodium phosphonate into the aqueous solution of diethyl sodium phosphinate, and then reacting with theoretical amount of 20wt% aluminum sulfate aqueous solution.

The content of ethyl aluminum phosphonate was 0.99wt%.

### Embodiment 12:

The aqueous solution of 20wt% diethyl sodium phosphinate was prepared the same as Embodiment 1. The additive composition was prepared by adding 10wt% of ethyl sodium phosphonate into the aqueous solution of diethyl sodium phosphinate, and then reacting with theoretical amount of 20wt% aluminum sulfate aqueous solution.

The content of ethyl aluminum phosphonate was 9.1wt%.

### Embodiment 13

The aqueous solution of 20wt% diethyl sodium phosphinate was prepared the same as Embodiment 1. The additive composition was prepared by adding 25wt% of ethyl sodium phosphonate into the aqueous solution of diethyl sodium phosphinate, and then reacting with theoretical amount of 20wt% aluminum sulfate aqueous solution.

The content of ethyl aluminum phosphonate was 20wt%.

### Embodiment 14

1060.0g (10mol) of sodium hypophosphite monohydrate, 2.2g (0.01mol) of sodium phosphite pentahydrate, 9.1g (0.3%mol of hypophosphite ions) of 1,1-di(ter-butylperoxy)-3,3,5-trimethyl-cyclohexane, 3.0g of sodium borohydride and 1500g of water were added into the autoclave. The autoclave was evacuated followed by three times of nitrogen displacement, and then was evacuated again. Ethylene was injected by the decompressor and the pressure of the autoclave was controlled at 2.0MPa. The temperature of the autoclave was heated to 95°C and kept constant for 5 hours. 18.1g (0.6%mol of hypophosphite ions) of 1,1-di(ter-butylperoxy)-3,3,5-trimethyl-cyclohexane was refilled continuously within the 5 hours, followed by the temperature being increased to 100°C and kept constant for 1 hour. After the autoclave was cooled and vented, 3173.6g of aqueous solution of diethyl sodium phosphinate was obtained, corresponding to the absorptive amount of ethylene of 581.2g (103.7% of the theoretical amount).

Analysis of ³¹P-NMR:
molar content of diethyl phosphinic acid: 99.9%
molar content of ethyl phosphonic acid: 0.1% (0.09wt%, a mass content after being converted into aluminum salt from the molar content, similarly hereinafter)
molar content of phosphorous acid: 0%

951.2g of the aqueous solution of diethyl sodium phosphinate was added with 2000g of water, followed by being heated to 90°C. A solution of 20% aluminum sulfate octadecahydrate which was prepared by mixing 333.7g (0.501mol) of aluminum sulfate octadecahydrate with 1333g of water, was dropwise added thereto within 1.5 hours, and the temperature was kept at 90°C for 1 hour. After filtration and being washed with 2000L of water for three times, a filter cake was obtained and dried at 130°C to a constant weight. 376.0g of additive composition was obtained with a yield (containing ethyl aluminum phosphonate, similarly hereinafter) of 96.31%.

### Embodiment 15:

1060.0g (10mol) of sodium hypophosphite monohydrate, 21.6g (0.1mol) of sodium phosphite pentahydrate, 9.1g (0.3%mol of hypophosphite ions) of 1,1-di(ter-butylperoxy)-3,3,5-trimethyl-cyclohexane, 3.0g of sodium borohydride and 1500g of water were added into the autoclave. The autoclave was evacuated followed by three times of nitrogen displacement, and then was evacuated again. Ethylene was injected by the decompressor and the pressure of the autoclave was controlled at 2.0MPa. The temperature of the autoclave was heated to 87°C and kept constant for 5 hours, after that, the temperature was increased to 95°C. 18.1g (0.6%mol of hypophosphite ions) of 1,1-di(ter-butylperoxy)-3,3,5-trimethyl-cyclohexane was refilled within the 5 hours, followed by the temperature being increased to 100°C and kept constant for 1 hour. After the autoclave was cooled and vented, 3193.0g of aqueous solution of diethyl sodium phosphinate was obtained, corresponding to the absorptive amount of ethylene of 581.2g (103.3% of the theoretical amount).

Analysis of ³¹P-NMR:
molar content of diethyl phosphinic acid: 98.9%
molar content of ethyl phosphonic acid: 1.1% (0.97wt%) molar content of phosphorous acid: 0%

957.9g of the aqueous solution of diethyl sodium phosphinate was added with 2000g of water, followed by being heated to 90°C. A solution of 20% aluminum sulfate octadecahydrate which was prepared by mixing 339.7g (0.510mol) of aluminum sulfate octadecahydrate with 1359g of water, was dropwise added thereto within 1.5 hours, and the temperature was kept at 90°C for 1 hour. After filtration and being washed with 2000L of water for three times, a filter cake was obtained and dried at 130°C to a constant weight. 376.3g of additive composition was obtained with a yield of 95.56%.

### Embodiment 16

1060.0g (10mol) of sodium hypophosphite monohydrate, 108g (0.5mol) of sodium phosphite pentahydrate, 9.1g (0.3%mol of hypophosphite ions) of 1,1-di(ter-butylperoxy)-3,3,5-trimethyl-cyclohexane, 3.0g of sodium borohydride and 1500g of water were added into the autoclave. The autoclave was evacuated followed by three times of nitrogen displacement, and then was evacuated again. Ethylene was injected by the decompressor and the pressure of the autoclave was controlled at 2.0MPa. The temperature of the autoclave was heated to 87°C and kept constant for 5 hours after that, the temperature was increased to 95°C. 27.2g (0.9%mol of hypophosphite ions) of 1,1-di(ter-butylperoxy)-3,3,5-trimethyl-cyclohexane was refilled continuously within the 5 hours, followed by the temperature being increased to 100°C and kept constant for 1 hour. After the autoclave was cooled and vented, 3305.4g of aqueous solution of diethyl sodium phosphinate was obtained, corresponding to the absorptive amount of ethylene of 598.1g (104.2% of the theoretical amount).

Analysis of ³¹P-NMR:
molar content of diethyl phosphinic acid: 95.2%
molar content of ethyl phosphonic acid: 4.8% (4.2wt%)
molar content of phosphorous acid: 0%

991.0g of the aqueous solution of diethyl sodium phosphinate was added with 2000g of water, followed by being heated to 90°C. A solution of 20% aluminum sulfate octadecahydrate which was prepared by mixing 366.3g (0.550mol) of aluminum sulfate octadecahydrate with 1465g of water, was dropwise added thereto within 1.5 hours, and the temperature was kept at 90°C for 1 hour. After filtration and being washed with 2000L of water for three times, a filter cake was obtained and dried at 130°C to a constant weight. 391.2g of additive composition was obtained with a yield of 95.64%.

### Embodiment 17

1060.0g (10mol) of sodium hypophosphite monohydrate, 216g (1.0mol) of sodium phosphite pentahydrate, 9.1g (0.3%mol of hypophosphite ions) of 1,1-di(ter-butylperoxy)-3,3,5-trimethyl-cyclohexane, 3.0g of sodium borohydride and 1500g of water were added into the autoclave. The autoclave was evacuated followed by three times of nitrogen displacement, and then was evacuated again. Ethylene was injected by the decompressor and the pressure of the autoclave was controlled at 2.0MPa. The temperature of the autoclave was heated to 87°C and kept constant for 5 hours after that, the temperature was increased to 95°C. 27.2g (0.9%mol of hypophosphite ions) of 1,1-di(ter-butylperoxy)-3,3,5-trimethyl-cyclohexane was refilled continuously within the 5 hours, followed by the temperature being increased to 100°C and kept constant for 1 hour. After the autoclave was cooled and vented, 3425.6g of aqueous solution of diethyl sodium phosphinate was obtained, corresponding to the absorptive amount of ethylene of 610.3g (103.8% of the theoretical amount).

Analysis of ³¹P-NMR:
molar content of diethyl phosphinic acid: 91.2%
molar content of ethyl phosphonic acid: 8.8% (7.8wt%)
molar content of phosphorous acid: 0%

1027.7g of the aqueous solution of diethyl sodium phosphinate was added with 2000g of water, followed by being heated to 90°C. A solution of 20% aluminum sulfate octadecahydrate which was prepared by mixing 399.6g (0.600mol) of aluminum sulfate octadecahydrate with 1599g of water, was dropwise added thereto within 1.5 hours, and the temperature was kept at 90°C for 1 hour. After filtration and being washed with 2000L of water for three times, a filter cake was obtained and dried at 130°C to a constant weight. 409.2g of additive composition was obtained with a yield of 95.59%.

### Embodiment 18

1060.0g (10mol) of sodium hypophosphite monohydrate, 540.0g (2.5mol) of sodium phosphite pentahydrate, 9.1g (0.3%mol of hypophosphite ions) of 1,1-di(ter-butylperoxy)-3,3,5-trimethyl-cyclohexane, 3.0g of sodium borohydride and 1500g of water were added into the autoclave. The autoclave was evacuated followed by three times of nitrogen displacement, and then was evacuated again. Ethylene was injected by the decompressor and the pressure of the autoclave was controlled at 2.0MPa. The temperature of the autoclave was heated to 87°C and kept constant for 5 hours after that, the temperature was increased to 95°C. 32.3g (1.2%mol of hypophosphite ions) of 1,1-di(ter-butylperoxy)-3,3,5-trimethyl-cyclohexane was refilled continuously within the 5 hours, followed by the temperature being increased to 100°C and kept constant for 1 hour. After the autoclave was cooled and vented, 3804.0g of aqueous solution of diethyl sodium phosphinate was obtained, corresponding to the absorptive amount of ethylene of 659.6g (104.7% of the theoretical amount).

Analysis of ³¹P-NMR:
molar content of diethyl phosphinic acid: 80.8%
molar content of ethyl phosphonic acid: 19.2% (17.2wt%)
molar content of phosphorous acid: 0%

1141.2g of the aqueous solution of diethyl sodium phosphinate was added with 2000g of water, followed by being heated to 90°C. A solution of 20% aluminum sulfate octadecahydrate which was prepared by mixing 499.5g (0.750mol) of aluminum sulfate octadecahydrate with 1998g of water, was dropwise added thereto within 1.5 hour, and the temperature was kept at 90°C for 1 hour. After filtration and being washed with 2000L of water for three times, a filter cake was obtained and dried at 130°C to a constant weight. 460.1g of additive composition was obtained with a yield of 94.82%.

### Embodiment 19

The same as Embodiment 1, 0.1mol% of sodium phosphite (0.1%mol means percent contents accounting for diethyl sodium phosphinate, similarly hereinafter) was added into the aqueous solution of diethyl sodium phosphinate, followed by reacting with theoretical amount of aluminum sulfate. Then the additive composition was obtained. The content of aluminum phosphite was 0.075wt% (percent contents of weight of aluminum phosphite accounting for a total weight of phosphorous acid and diethyl aluminum phosphinate, similarly hereinafter).

### Embodiment 20

The same as Embodiment 1, 1.0mol% of sodium phosphite was added into the aqueous solution of diethyl sodium phosphinate, followed by reacting with theoretical amount of aluminum sulfate. Then the additive composition was obtained. The content of aluminum phosphite was 0.75wt%.

### Embodiment 21

The additive composition for polymer was obtained by adding 5000g of diethyl aluminum phosphinate and 1g of aluminum phosphite into the high-speed mixer for mixing for 30 minutes.

In particular, the content of aluminum phosphite was 0.02wt%.

### Embodiment 22

The additive composition for polymer was obtained by adding 5000g of diethyl aluminum phosphinate and 5.0g of aluminum phosphite into the high-speed mixer for mixing for 30 minutes.

In particular, the content of aluminum phosphite was 0.10%.

### Embodiment 23

The additive composition for polymer was obtained by adding 5000g of diethyl aluminum phosphinate and 45.0g of aluminum phosphite into the high-speed mixer for mixing for 30 minutes.

In particular, the content of aluminum phosphite was 0.89%.

### Embodiment 24

The same as Embodiment 1, 1mol% of ethyl sodium phosphonate and 1mol% of sodium phosphite were added into the aqueous solution of diethyl sodium phosphinate, followed by reacting with theoretical amount of aluminum sulfate. Then the additive composition was obtained. The content of ethyl aluminum phosphonate was 0.95wt% and the content of aluminum phosphite was 0.74wt%.

### Embodiment 25

The additive composition for polymer was obtained by adding 5000g of diethyl aluminum phosphinate, 50g of aluminum phosphite and 40g of ethyl aluminum phosphonate into the high-speed mixer for mixing for 30 minutes.

In particular, the content of ethyl aluminum phosphonate was 0.98wt% and the content of aluminum phosphite was 0.78wt%.

### Comparative Embodiment 1

The additive composition for polymer was obtained by adding 5000g of diethyl aluminum phosphinate and 60g of aluminum phosphite into the high-speed mixer for mixing for 30 minutes.

In particular, the content of aluminum phosphite was 1.19wt%. Table 1 Each component of the additive used for plastics in Embodiments 1-25

| Embodiment | | 1 | 2 | 3 | 4 | 5 | 6 | 7 | 8 | 9 | 10 | 11 | 12 |
|---|---|---|---|---|---|---|---|---|---|---|---|---|---|
| diethyl aluminum phosphinate | wt% | 100 | 0 | 0 | 99.98 | 99.9 | 99.04 | 95.2 | 90.9 | 80.6 | 99.9 | 99.01 | 90.9 |
| ethyl aluminum phosphonate | wt% | 0 | 100 | 0 | 0.02 | 0.1 | 0.96 | 4.8 | 9.1 | 19.4 | 0.1 | 0.99 | 9.1 |
| aluminum phosphite | wt% | 0 | 0 | 100 | 0 | 0 | 0 | 0 | 0 | 0 | 0 | 0 | 0 |
| Embodiment | | 13 | 14 | 15 | 16 | 17 | 18 | 19 | 20 | 21 | 22 | 23 | 24 |
| diethyl aluminum phosphinate | wt% | 80 | 99.91 | 99.01 | 95.7 | 92.0 | 82.4 | 99.92 5 | 99.25 | 99.98 | 99.9 | 99.11 | 98.31 |
| ethyl aluminum phosphonate | wt% | 20 | 0.09 | 0.99 | 4.3 | 8.0 | 17.6 | 0 | 0 | 0 | 0 | 0 | 0.95 |
| aluminum phosphite | wt% | 0 | 0 | 0 | 0 | 0 | 0 | 0.075 | 0.75 | 0.02 | 0.1 | 0.89 | 0.74 |
| Embodiment | | 25 | Comp arativ e Embo dimen t 1 | | | | | | | | | | |
| diethyl aluminum phosphinate | wt% | 98.24 | 98.81 | | | | | | | | | | |
| ethyl aluminum phosphonate | wt% | 0.98 | 0 | | | | | | | | | | |
| aluminum phosphite | wt% | 0.78 | 1.19 | | | | | | | | | | |

The additive compositions for polymer obtained from Embodiments 1-25 and Comparative Embodiment 1 were mixed with PBT, glass fiber and promoter in a weight ratio of 10:50:30:10 at 230-260°C **(Embodiment 49 is a blank sample control without adding the additive composition, i.e. mixed in a weight ratio of 0:50:30:10).** After being extruded from a twin screw extruder, a flame retardant thermoplastic polymer molding material was obtained and sampled to test its combustion performances and mechanical performances. The test results are shown in Table 2:

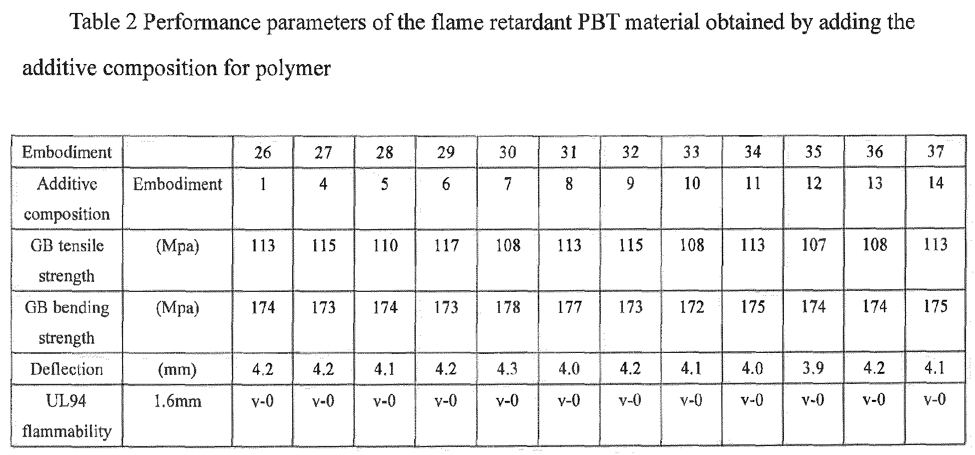

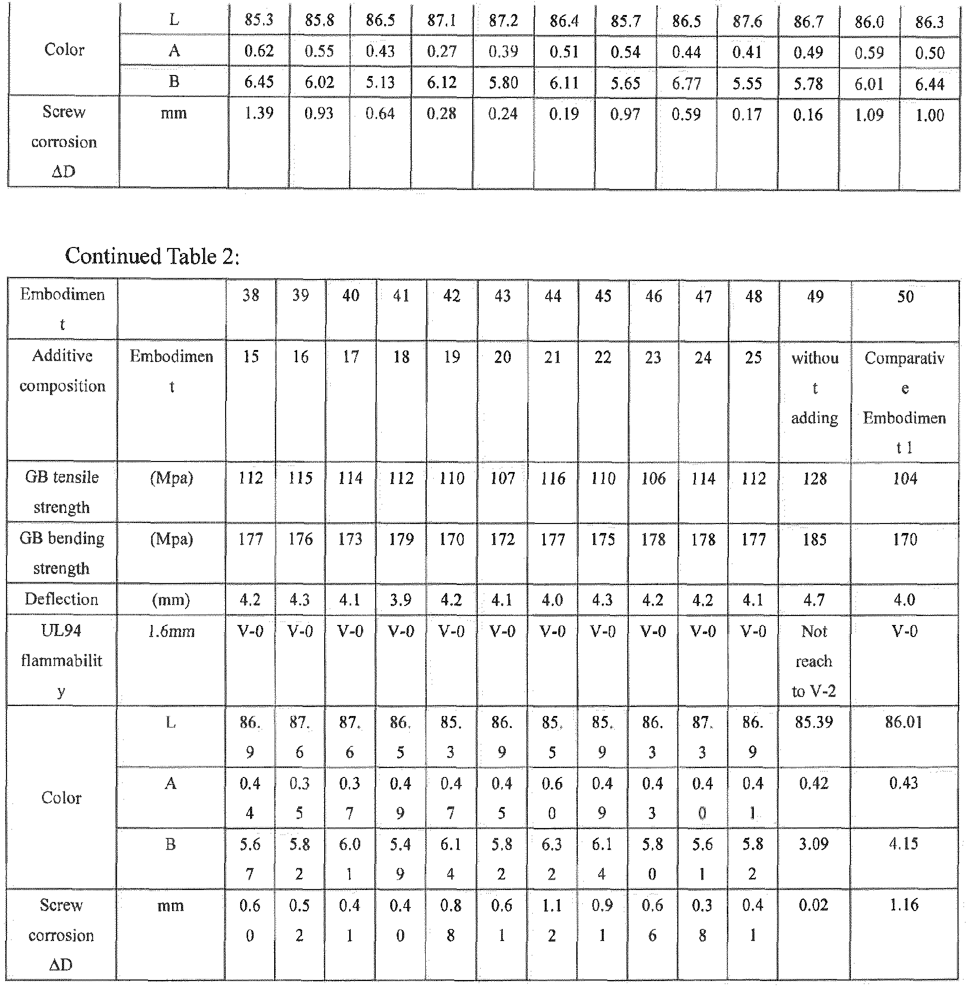

### Each performance test was conducted according to following standards:

1. tensile strength: GB1040-1992 Plastics-Determination of tensile properties;
2. bending strength: GB9341-2000 Plastics-Determination of flexural properties;
3. deflection: GB9341-2000 Plastics-Determination of flexural properties;
4. combustion performance: UL94 Test for Flammability of Plastic Materials;
5. determination of ΔD (corrosion extent to the screw): when a mixing combination device processes every 100 tons of polymer molding composition, a screw diameter is measured before and after production (D_{before} and D_{after}). A difference value of the screw diameter is calculated by ΔD = D_{before} - D_{after}. The larger the ΔD is, the severer the corrosion is to the screw.
6. color test standard:
   The color test is conducted via a Color-Eye-7000A color photometer (GretagMacbeth Inc.) by specific test method as follows:
   1) injection molding a resin to a 2mm-thick panel;
   2) setting parameters such as Lab value, measuring aperture of the color photometer, etc. according to components of the resin;
   3) displacing the panel at a test window, and clicking "test" button to test the Lab value; then the corresponding Lab value is shown by the system.

For natural color material of PBT, the larger the L value is, the whiter the color is, which is more convenient to match colors.

## Claims

1. An additive composition for polymer comprising components A, B and C, wherein it comprises:
a component A: 80wt% - 99.99wt% of dialkyl phosphinates with structures shown as Formula (I): 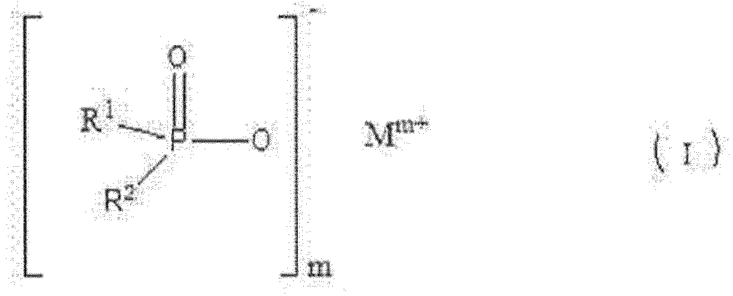 wherein, R1 and R2 are the same or different, representing ethyl, propyl and/or butyl; M is Mg, Ca, Al, Zn or Fe;
m is 2 or 3;
a component B: up to 20wt% of components
with structures shown as Formula (II): 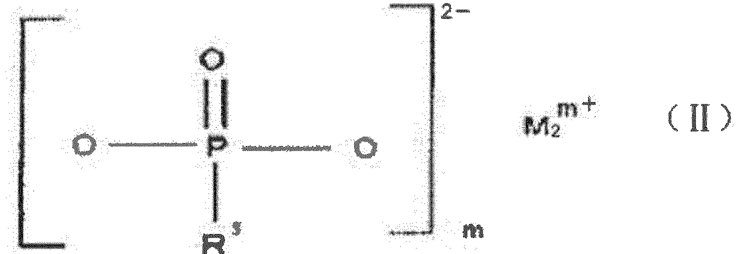 wherein, R3 represents ethyl, propyl and/or butyl; M is Mg, Ca, Al, Zn or Fe; m is 2 or 3; and
a component C: up to 0.9wt% of phosphites with structures shown as Formula (III): 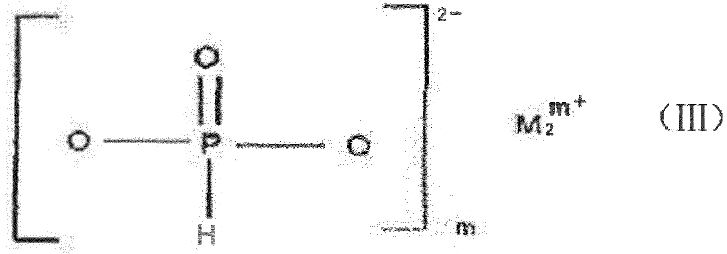 wherein, M is Mg, Ca, Al, Zn or Fe; m is 2 or 3;
and a total sum of the components A, B and C is always 100wt%.

2. The additive composition for polymer of claim 1, wherein it comprises:
95wt% - 99.99wt% of the component A;
up to 5wt% of the component B;
up to 0.9wt% of the component C;
and the total sum of components A, B and C is always 100wt%.

3. The additive composition for polymer of claim 1, wherein the polymer is PBT, nylon, PPE, TPE, TPU or epoxy resin, preferably PBT, nylon or PPE.

4. A preparation method of the additive composition for polymer of claim 1, **characterized in that**, it is in accordance with one of methods as follows:
method 1:
a) adding hypophosphorous acid or hypophosphite into a solvent, followed by a reaction with olefins under an effect of an initiator and a reaction promoter, dialkyl phosphinic acid or a salt solution thereof is obtained, dialkyl phosphinate is prepared by a reaction of a solution of dialkyl phosphinic acid or salt thereof with an aqueous solution of a metal compound;
b) adding phosphorous acid or phosphite into a solvent, followed by a reaction with olefins under an effect of an initiator and a reaction promoter, further reacting with an aqueous solution of a metal compound;
c) phosphite is obtained by a reaction of phosphorous acid or salt thereof with the metal compound;
d) the additive composition for polymer is obtained by mixing products obtained from step a) and step b) and step c);
wherein the hypophosphite is sodium hypophosphite or potassium hypophosphite; the phosphite is sodium phosphite or potassium phosphite;
the metal compound is a metal compound of Mg, Ca, Al, Zn or Fe;
or method 2:
mixing dialkyl phosphinic acid or the salt solution thereof with alkyl phosphonic acid or the salt solution thereof and/or phosphorous acid or a salt solution thereof, followed by a reaction with a solution of a metal compound, the additive composition for polymer is obtained.

5. The preparation method of the additive composition for polymer of claim 4, wherein the solvent is water; the initiator is an azo initiator, an organic peroxide initiator or an inorganic peroxide initiator; and the olefin is ethylene or butylene, or a mixture thereof.

6. The preparation method of the additive composition for polymer of claim 4, wherein the reaction promoter is sodium borohydride or potassium borohydride.

7. Use of the additive composition for polymer of the additive composition for polymer of claim 1 as a flame retardant.

8. A flame retardant thermoplastic polymer molding material containing the additive composition of claim 1, comprising 5 to 20 parts by weight of said additive for polymer, 50 to 70 parts by weight of the polymer or a mixture thereof.

9. The flame retardant thermoplastic polymer molding material of claim 8, wherein the polymer is polyester, nylon, PPE, TPE, TPU or epoxy resin, preferably polyester, nylon or PPE.

10. The flame retardant thermoplastic polymer molding material of claim 8, wherein it further comprises 15 to 30 parts by weight of a glass fiber and 1 to 5 parts by weight of other promoter.

## Patentansprüche

1. Additivzusammensetzung für Polymer, umfassend Komponenten A, B und C, wobei sie umfasst:
eine Komponente A: 80 Gew.-% - 99,99 Gew.-% Dialkylphosphinate mit Strukturen gezeigt als Formel (I): 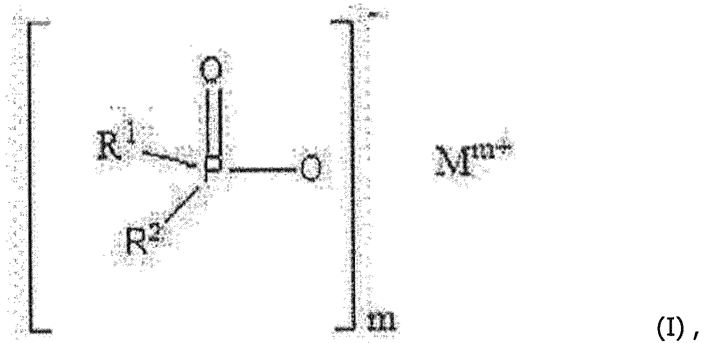 worin R1 und R2 gleich oder verschieden sind und für Ethyl, Propyl und/oder Butyl stehen;
M ist Mg, Ca, Al, Zn oder Fe;
m ist 2 oder 3;
eine Komponente B: bis zu 20 Gew.-% Komponenten mit Strukturen gezeigt als Formel (II): 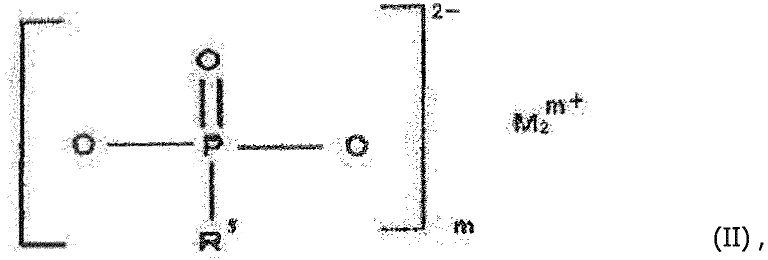 worin R3 für Ethyl, Propyl und/oder Butyl steht; M ist Mg, Ca, Al, Zn oder Fe; m ist 2 oder 3; und
eine Komponente C: bis zu 0,9 Gew.-% Phosphite mit Strukturen gezeigt als Formel (III): 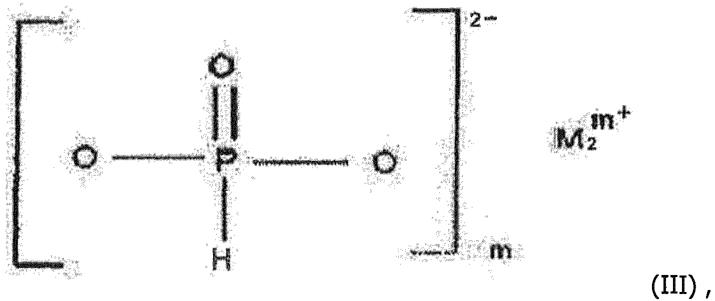 worin M Mg, Ca, Al, Zn oder Fe ist; m ist 2 oder 3;
und die Gesamtsumme der Komponenten A, B und C ist immer 100 Gew.-%.

2. Additivzusammensetzung für Polymer nach Anspruch 1, welche umfasst:
95 Gew.-% - 99,99 Gew.-% Komponente A;
bis zu 5 Gew.-% Komponente B;
bis zu 0,9 Gew.-% Komponente C;
und die Gesamtsumme der Komponenten A, B und C ist immer 100 Gew.-%.

3. Additivzusammensetzung für Polymer nach Anspruch 1, wobei das Polymer PBT, Nylon, PPE, TPE, TPU oder Epoxykunststoff ist, vorzugsweise PBT, Nylon oder PPE.

4. Verfahren zur Herstellung einer Additivzusammensetzung für Polymer nach Anspruch 1, **dadurch gekennzeichnet, dass** es in dem Verfahren wie folgt entspricht:
Verfahren 1:
a) Zugabe von hypophosphoriger Säure oder Hypophosphit in ein Lösemittel; gefolgt von einer Umsetzung mit Olefinen unter einer Wirkung eines Initiators und eines Reaktionspromoters, Dialkylphosphinsäure oder eine Salzlösung davon wird erhalten, Dialkylphosphinat wird hergestellt durch Umsetzung einer Lösung von Dialkylphosphinsäure oder Salzes davon, mit einer wässrigen Lösung einer Metallverbindung;
b) Zugabe von Phosphorsäure oder Phosphit in ein Lösemittel, gefolgt von einer Umsetzung mit Olefinen unter einer Wirkung eins Initiators und eines Reaktionspromoters, weitere Umsetzung mit einer wässrigen Lösung einer Metallverbindung;
c) Phosphit wird erhalten durch Umsetzung von Phosphorsäure oder Salzes davon mit der Metallverbindung;
d) die Additivzusammensetzung für Polymer wird erhalten durch Mischung der in Schritt a) und Schritt b) und Schritt c) erhaltenen Produkte;
wobei das Hypophosphit Natriumhypophosphit oder Kaliumhypophosphit ist; das Phosphit ist Natriumphosphit oder Kaliumphosphit;
die Metallverbindung ist eine Metallverbindung von Mg, Ca, Al, Zn oder Fe;
oder Verfahren 2:
Mischen von Dialkylphosphinsäure oder der Salzlösung davon mit Alkylphosphonsäure- oder Salzlösung davon und/oder Phosphorsäure- oder einer Salzlösung davon, gefolgt von einer Umsetzung mit einer Lösung einer Metallverbindung, die Additivzusammensetzung für Polymer wird erhalten.

5. Verfahren zur Herstellung der Additivzusammensetzung für Polymer nach Anspruch 4, wobei das Lösemittel Wasser ist; der Initiator ist ein Azo-Initiator, ein organischer Peroxid-Initiator oder ein anorganischer Peroxid-Initiator; und das Olefin ist Ethylen oder Butylen oder eine Mischung davon.

6. Verfahren zur Herstellung der Additivzusammensetzung für Polymer nach Anspruch 4, wobei der Reaktionspromoter Natriumborhydrid oder Kaliumborhydrid ist.

7. Verwendung der Additivzusammensetzung für Polymer von der Additivzusammensetzung für Polymer nach Anspruch 1 als Flammhemmmittel.

8. Flammhemmendes thermoplastisches Polymer-Formmaterial, enthaltend die Additivzusammensetzung nach Anspruch 1, umfassend 5 bis 20 Gewichtsteile des Additivs für Polymer, 50 bis 70 Gewichtsteile des Polymers oder eine Mischung davon.

9. Flammhemmendes thermoplastisches Polymer-Formmaterial nach Anspruch 8, wobei das Polymer Polyester, Nylon, PPE, TPE, TPU oder Epoxykunststoff ist, vorzugsweise Polyester, Nylon oder PPE.

10. Flammhemmendes thermoplastisches Polymer-Formmaterial nach Anspruch 8, wobei es weiterhin 15 bis 30 Gewichtsteile Glasfasern und 1 bis 5 Gewichtsteile anderer Promoter umfasst.

## Revendications

1. Composition d'additif pour polymère comprenant les constituants A, B et C, dans laquelle elle comprend :
un constituant A : 80 % en poids à 99,99 % en poids de phosphinates de dialkyle avec des structures représentées par la formule (I) : 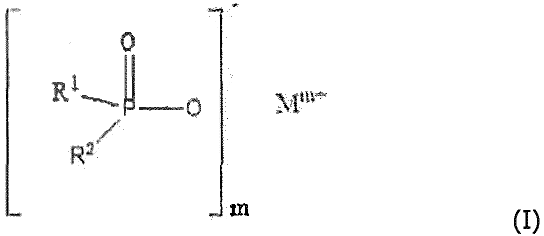 dans laquelle R1 et R2 sont identiques ou différents, représentant l'éthyle, le propyle et/ou le butyle ;
M est le Mg, le Ca, l'Al, le Zn ou le Fe ;
m est 2 ou 3 ;
un constituant B : jusqu'à 20 % en poids de constituants avec des structures représentées par la formule (II) : 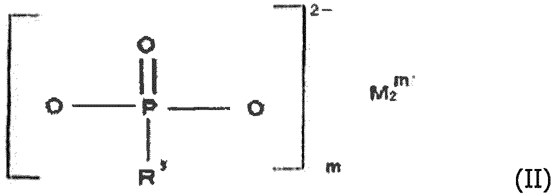 dans laquelle, R3 représente l'éthyle, le propyle et/ou le butyle ; M est le Mg, le Ca, l'Al, le Zn ou le Fe ; m est 2 ou 3 ; et
un constituant C : jusqu'à 0,9 % en poids de phosphites avec des structures représentées par la formule (III) : 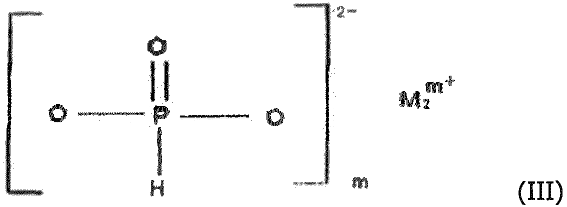 dans laquelle, M est le Mg, le Ca, l'Al, le Zn ou le Fe ; m est 2 ou 3 ;
et une somme totale des constituants A, B et C est toujours de 100 % en poids.

2. Composition d'additif pour polymère selon la revendication 1, dans laquelle elle comprend :
95 % en poids à 99,99 % en poids du constituant
jusqu'à 5 % en poids du constituant B ;
jusqu'à 0,9 % en poids du constituant C ;
et la somme totale des constituants A, B et C est toujours de 100 % en poids.

3. Composition d'additif pour polymère selon la revendication 1, dans laquelle le polymère est un PBT, un nylon, un PPE, un TPE, un TPU ou une résine époxyde, de préférence un PBT, un nylon ou un PPE.

4. Procédé de préparation de la composition d'additif pour polymère selon la revendication 1, **caractérisé en ce qu'**il est conforme à l'un des procédés suivants :
procédé 1 :
a) ajout d'acide hypophosphoreux ou d'hypophosphite dans un solvant, suivi d'une réaction avec des oléfines sous l'effet d'un initiateur et d'un activateur de réaction, un acide dialkyl phosphinique ou une solution de sel de celui-ci est obtenu, un phosphinate de dialkyle est préparé par une réaction d'une solution d'acide dialkyl phosphinique ou d'un sel de celui-ci avec une solution aqueuse d'un composé métallique ;
b) ajout d'acide phosphoreux ou de phosphite dans un solvant, suivi d'une réaction avec des oléfines sous l'effet d'un initiateur et d'un activateur de réaction, réaction supplémentaire avec une solution aqueuse d'un composé métallique ;
c) le phosphite est obtenu par une réaction d'acide phosphoreux ou d'un sel de celui-ci avec le composé métallique ;
d) la composition d'additif pour polymère est obtenue par mélange des produits obtenus à l'étape a) et l'étape b) et l'étape c) ;
dans lequel l'hypophosphite est l'hypophosphite de sodium ou l'hypophosphite de potassium ; le phosphite est le phosphite de sodium ou le phosphite de potassium ;
le composé métallique est un composé métallique de Mg, de Ca, d'Al, de Zn ou de Fe ;
ou procédé 2 :
mélange d'un acide dialkyl phosphinique ou de la solution de sel de celui-ci avec un acide alkyl phosphonique ou la solution de sel de celui-ci et/ou d'acide phosphoreux ou d'une solution de sel de celui-ci, suivi d'une réaction avec une solution d'un composé métallique, la composition d'additif pour polymère est obtenue.

5. Procédé de préparation de la composition d'additif pour polymère selon la revendication 4, dans lequel le solvant est l'eau ; l'initiateur est un initiateur azoïque, un initiateur peroxyde organique ou un initiateur peroxyde inorganique ; et l'oléfine est l'éthylène ou le butylène, ou un mélange de ceux-ci.

6. Procédé de préparation de la composition d'additif pour polymère selon la revendication 4, dans lequel l'activateur de réaction est le borohydrure de sodium ou le borohydrure de potassium.

7. Utilisation de la composition d'additif pour polymère de la composition d'additif pour polymère selon la revendication 1 comme ignifugeant.

8. Matériau de moulage de polymère thermoplastique ignifuge contenant la composition d'additif selon la revendication 1, comprenant 5 à 20 parties en poids dudit additif pour polymère, 50 à 70 parties en poids du polymère ou un mélange de ceux-ci.

9. Matériau de moulage de polymère thermoplastique ignifuge selon la revendication 8, dans lequel le polymère est un polyester, un nylon, un PPE, un TPE, un TPU ou une résine époxyde, de préférence un polyester, un nylon ou un PPE.

10. Matériau de moulage de polymère thermoplastique ignifuge selon la revendication 8, dans lequel il comprend en outre 15 à 30 parties en poids d'une fibre de verre et 1 à 5 parties en poids d'un autre activateur.
